# EUROPEAN PATENT SPECIFICATION

(11) **EP 2 982 507 B1**
(45) Date of publication and mention of the grant of the patent: **01.04.2020**
(21) Application number: 15275159.0
(22) Date of filing: 23.06.2015
(51) Int. Cl.: B32B 17/10, H05B 3/86, H01R 4/10, H01R 4/70

(54) **AN ELECTRICALLY HEATED LAMINATED WINDOW**
ELEKTRISCH BEHEIZBARES, LAMINIERTES FENSTER
FENÊTRE STRATIFIÉE CHAUFFÉE ÉLECTRIQUEMENT

(30) Priority: 04.08.2014 GB 201413746
(43) Date of publication of application: 10.02.2016
(73) Proprietor: Ford Global Technologies, LLC, Dearborn, MI 48126 (US)
(72) Inventor: Fawcett, Nigel, London, SE10 9JH (GB)
(74) Representative: Haseltine Lake Kempner LLP

(56) References cited:
- EP-A2- 0 483 707
- EP-A2- 0 719 075
- WO-A1-2008/047164
- US-A- 3 529 074

## Description

This invention relates to electrically heated laminated windows and in particular to the provision of an electrical supply to an embedded electrical heating device of such a window such as an electrically heated laminated windshield.

It is known to produce a laminated glass window or windshield by bonding two layers or panes of shaped and annealed glass together with a plastic interlayer. The plastic interlayer is usually made from polyvinyl butyral (PVB) which is sandwiched between the glass panes. A typical laminated windshield comprises of a 2 mm glass pane, a 0.4 mm plastic interlayer and a second 2 mm glass pane that are bonded together to produce a 4.4mm thick laminated window such as a windshield.

As an alternative to the use of PVB it is also known to use as a plastic lamination material Ethyl Vinyl Acetate (EVA) and thermoplastic Polyurethane (TPU).

It is further known to embed a heater unit within the laminated glass structure to provide a means for heating the laminated windshield.

It is a problem with known motor vehicle heated laminated windshields that use an embedded heater unit that these sometimes fail in service through corrosion adjacent to and/or within a power supply busbar used to connect the heater unit to a source of electrical energy.

Analysis of such failed heaters has identified corrosion caused by water ingress along power supply ribbons used to connect the power busbars to a main electrical supply circuit of the motor vehicle to be a major factor. It is known to try and solve this problem by placing adhesive tape so as to try and seal between the electrical supply ribbon and the glass but this is not particularly successful and is also a relatively time consuming process due to the need accurately position the adhesive tape.

There is therefore a need to seal any electrical busbars against water ingress that would otherwise cause corrosion of the heater material.

It is a problem that by running live and earth busbars adjacent to each other in close proximity on the same side as the window heater unit risks unwanted short circuits and there is a need to provide a solution to this problem.

It is a problem that it is often difficult at the corners of the windshield to maintain a minimum distance of any electrical busbars from the glass edge and there is a need for a busbar corner construction that overcomes this problem.

It is a problem that in order to maximise the heated area of the windshield any busbars need to be positioned close to a periphery of the windshield but this is difficult to achieve if the busbars have to be positioned away from the periphery of the windshield in order to provide sufficient space for an electrical connection to be made with the busbar and so there is a need to provide a solution to this problem.

There is a need to have all electrical connections from the windshield close together so as to facilitate simple connection to a power circuit of the motor vehicle and, in some cases, the need is for such connections to be located on a cowl edge of the windshield.

It is an object of this invention to provide a heated laminated window of simple construction that provides solutions to at least some of the aforementioned needs. WO2008/047164A1 and EP0719075A2 both disclose electrically heated laminated windows for vehicles.

According to a first aspect of the invention there is provided a heated laminated window comprising first and second panes of glass, a laminating interlayer interposed between the two panes of glass and bonded thereto to form a laminated window, an electrical window heater interposed between the first pane of glass and the laminating interlayer and a thin, flat electrical conductor for connecting the electrical window heater to a source of electrical power wherein the thin, flat electrical conductor extends through an angled slit in the laminating interlayer and is folded over at an angle corresponding to the angular relationship of the slit to the thin, flat electrical conductor as it passes through the slit so as to have first and second portions lying on opposite sides of the laminating interlayer arranged at a turn angle with respect to one another.

The turn angle may be related to the angle of the slit with respect to the thin, flat electrical conductor prior to folding of the thin, flat electrical conductor.

The thin, flat electrical conductor may be bonded on all sides to the laminating interlayer where it passes through the slit to form a water impervious seal between laminating interlayer and the thin, flat electrical conductor.

The thin, flat electrical conductor may be encapsulated in the laminating interlayer where it passes through the slit due to the bonding process.

The first portion of the thin, flat electrical conductor may be interposed between the first pane of glass and the laminating interlayer and may extend from a position where the thin, flat electrical conductor passes through the slit to an end where it is connected to a first end of the window heater and the second portion may extend away from the position where the first thin, flat electrical conductor passes through the slit and may be interposed between the laminating layer and the second pane of glass.

A conductive ribbon may be connected to the second portion of the first thin, flat electrical conductor for connecting the first thin, flat electrical conductor to a source of electrical power.

The first thin, flat electrical conductor may be a first busbar connected to the first end of the window heater and the heated laminated window may further comprise a second busbar connected to a second end of the window heater.

The conductive ribbon may extend away from the second portion of the thin, flat electrical conductor and has a free end extending outwardly from an outer peripheral edge of the laminated window.

The heated laminated window may have a first busbar connected to a first end of the window heater and a second busbar connected to a second end of the window heater and the thin, flat electrical conductor may be an electrically conductive ribbon having first and second portions for connecting the second busbar to a source of electrical power.

The first portion may be interposed between the second pane of glass and the laminating interlayer and the second portion may be interposed between the first pane of glass and the laminating interlayer, the first portion of the electrically conductive ribbon may extend away from the position where the electrically conductive ribbon passes through the slit in the laminating interlayer to a free end extending outwardly from an outer peripheral edge of the laminated window and the second portion of the electrically conductive ribbon may extend away from the position where the electrically conductive ribbon passes through the slit and is connected to the second busbar.

The first and second portion may be arranged with respect to one another at a turn angle that may be substantially equal to ninety degrees.

The heated laminated window may have first and second busbars connected to respective first and second ends of the window heater, two slits in the laminating interlayer and two thin, flat electrical conductors each of which extends through a respective one of the two slits in the laminating interlayer wherein a first one of the two thin flat electrical conductors forms the first busbar and a second one of the two thin, flat electrical conductors forms an electrically conductive ribbon used to connect the second busbar to a source of electrical power.

The window heater may comprise a plurality of heater wires and respective first ends of the heater wires are connected to the first busbar and respective second ends of the heater wires are connected to the second busbar.

The first busbar may have a first portion interposed between the first pane of glass and the laminating interlayer and may extend from a position where the first busbar passes through the respective slit to an end where it is connected to the first end of the window heater and may have a second portion extending away at the turn angle with respect to the first portion of the first busbar from the position where the first busbar passes through the respective slit and on an opposite side of the laminating layer to the first portion of the first busbar.

The electrically conductive ribbon may have a first portion interposed between the second pane of glass and the laminating interlayer and a second portion interposed between the first pane of glass and the laminating interlayer and the first portion of the electrically conductive ribbon may extend away from the position where the electrically conductive ribbon passes through the slit in the laminating interlayer to a free end extending outwardly from an outer peripheral edge of the laminated window and the second portion of the electrically conductive ribbon may extend away from the position where the electrically conductive ribbon passes through the respective slit, is connected to the second busbar and is arranged at the turn angle with respect to the first portion of the electrically conductive ribbon so as to lie on top of the second busbar.

The heated laminated window may comprises four slits in the laminating interlayer, four thin, flat electrical conductors each of which extends through a respective one of the slits and first and second window heaters each of which has respective first and second busbars connected to respective first and second ends of the respective window heater, in which case the first window heater may have a first one of the four thin flat electrical conductors connected to it in the form of the respective first busbar and a second one of the four thin, flat electrical conductors in the form of an electrically conductive ribbon connecting the respective second busbar to a source of electrical power and the second window heater may have a third one of the four thin flat electrical conductors connected to it in the form of the respective first busbar and a fourth one of the four thin, flat electrical conductor in the form of an electrically conductive ribbon connecting the respective second busbar to the source of electrical power.

According to a second aspect of the invention there is provided a motor vehicle having a laminated heated window constructed in accordance with said first aspect of the invention.

The invention will now be described by way of example with reference to the accompanying drawing of which:-
Fig.1 is a schematic rear view of a first embodiment of laminated heated windscreen constructed in accordance with the invention showing the position of two electrical conductors and respective edge connectors;
Fig.2 is an enlarged view of the area 'a' on Fig.1;
Fig.3 is an enlarged view of the area 'b' on Fig.1;
Fig.4 is a edge view in the direction of arrow 'x' on Fig.3; and
Fig.5 is a view similar to Fig.1 but showing a heated laminated window in accordance with a further embodiment of the invention having two window heaters.

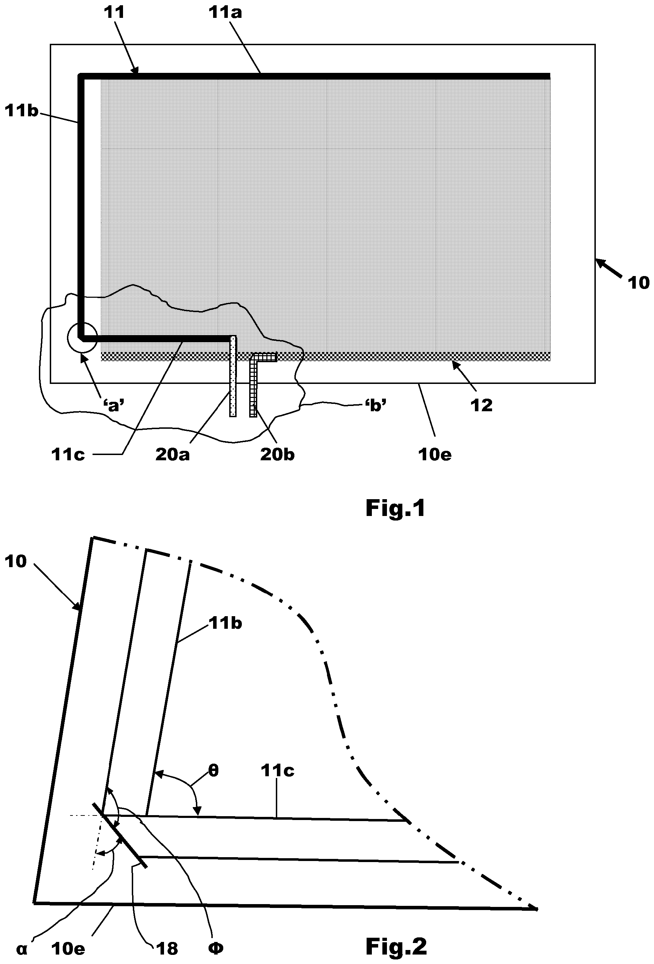

Referring now to Figs.1 to 4 there is shown a first embodiment of a heated laminated window in accordance with this invention in the form of an electrically heated laminated window in the form of windshield 10 for a motor vehicle.

The electrically heated windshield 10 comprises of first and second panes of glass 15, 16 having a plastic laminating interlayer 17 such as a PVB interlayer interposed between and bonded to the two panes 15, 16. Each of the panes of glass has a first or inner surface 15i, 16i and a second or outer surface 15o, 16o. The plastic laminating interlayer 17 is bonded between the two first surfaces 15i, 16i of the two panes of glass 15, 16. In the case of this example the outer surface 15o is located outside of a motor vehicle in use and the outer surface 16o is located inside the motor vehicle.

An electrical device in the form of a window heater 13 comprises in this case of a number of heating wires interposed between the first surface 15i of the first pane of glass 15 and the plastic laminating interlayer 17. Each of the heating wires is a tungsten filament and is typically 10 to 50µm thick. It will be appreciated that other forms of electrical window heater could be used and that the invention is not limited to the use of tungsten filament window heater. For example, the window heater could alternatively be a resistive film heater or could be a screen printed heat resistant conductive pattern on one of the inner surfaces 15i, 16i of the first and second panes of glass 15, 16.

Each heating wire has in this case a first input at one end connected to a thin, flat electrical conductor in the form of a first busbar 11 and a second input at an opposite end connected to a thin, flat electrical conductor in the form a second busbar 12. The heating wires in this case extend in a vertical direction and are connected in parallel between the first and second busbars 11 and 12.

The first busbar 11 has two portions forming three limbs 11a, 11b and 11c. The first portion comprises a first or upper limb 11a and a second or side limb 11b and the second portion comprises a third or lower limb 11c.

The first and second portions of the first busbar 11 are located on opposite sides of the plastic laminating interlayer 17 as will be described in more detail hereinafter.

The second busbar 12 is in this case in the form of a single thin, flat strip of electrically conductive material.

Further electrical conductors in the form of first and second electrically conductive ribbons 20a, 20b are used to provide respective electrical connections between the two busbars 11, 12 and an external source of electrical power (not shown) such as, for example, a power supply circuit of a motor vehicle. The first and second electrically conductive ribbons 20a, 20b are located next to one another to aid connection to the external source of electrical power.

The busbars 11, 12 may for example be 0.0001 to 0.0002m thick and 0.006 to 0.010m wide and the electrically conductive ribbons may be 0.0001 thick and 0.015 to 0.020m wide.

It will be appreciated that obscuration means are used to obscure from view the busbars 11, 12 and the electrically conductive ribbons 20, 20b. Such means may be in the form of a trim strip or more often a black ceramic ink or black primer applied around the perimeter of the inner surfaces 15i, 16i of the first and second panes of glass 15, 16 respectively.

The first busbar 11 is a thin ribbon or strip of electrically conductive material such as, for example and without limitation, tinned copper. A cut or slit 18 is formed in the plastic laminating interlayer 17 at a position where the direction of the busbar 11 is required to change from a substantially vertical direction to a substantially horizontal direction.

During manufacture, one end of the first busbar 11 is pushed through the slit 18 to a desired position for the change of direction and the busbar 11 is then folded over so as to form the first and second portions.

The first portion of the first busbar 11 comprising the first and second limbs 11a and 11b is interposed between the inner surface 15i of the first pane of glass 15 and the laminating interlayer 17 and extends from a position where the first busbar 11 passes through the slit 18 to an end where it is connected to the first end of the window heater 13.

The second portion of the first busbar 11 in the form of the third limb 11c extends away at a turn angle θ with respect to the first portion of the first busbar 11 from the position where the first busbar 11 passes through the slit 18 and is located on an opposite side of the laminating layer 17 to the first portion of the first busbar 11. That is to say, the first and second limbs 11a an 11b lie between the plastic laminating interlayer 17 and the inner surface 15i of the first pane of glass 15 and the third limb 11c lies between the plastic laminating interlayer 17 and the inner surface 16i of the second pane of glass 16.

The turn angle θ is the amount the busbar 11 turns due to the fold as it traverses the plastic laminating interlayer 17 and is related to the angle of the slit 18 to the first busbar 11. It will be appreciated that the busbar 11 is folded over at an angle as it passes through the plastic laminating interlayer 17 that corresponds to the angle of the slit 18 in the plastic laminating interlayer 17.

In this case the angle of the slit 18 (slit angle Φ) is approximately 130 degrees with respect to the first portion of the first busbar 11 and a supplementary angle α is equal to 50 degrees. This is because the supplementary angle α is in this case measured with reference a line corresponding to the position of the first busbar 11 prior to it being folded over and hence it is equal to 180 minus 130 degrees.

The turn angle θ representing the amount the busbar 11 turns due to the fold is in this case equal to 80 degrees and is equal to the slit angle Φ minus the supplementary angle α. It will be appreciated that the angle of the slit could be measured such that it is the angle α shown on Fig.2 in which case the supplementary angle would be Φ but the turn angle θ would still be equal to Φ minus α.

The slit 18 in the form of a cut in the plastic laminating interlayer 17 is provided to locate the first busbar 11 during assembly of the heated laminated window 10. The slit 18 also prevents the ingress of water from the first electrically conductive ribbon 20a past the position where the first busbar 11 traverses the plastic laminating interlayer 17 because during manufacture both sides of the first busbar 11 are encapsulated in and bonded to the plastic laminating interlayer 17 at this position so as to form a water tight seal around the first busbar 11 as it traverses the plastic laminating interlayer 17 through the slit 18.

Although for aid of understanding the slit 18 is shown to be much longer than the width of the first busbar 11 as it passes through the slit 18, preferably the length of the slit 18 is such that the first busbar 11 is close fit in the slit 18 prior to bonding. This helps to ensure that the first busbar 11 is bonded on all sides to the plastic laminating interlayer 17 where it passes through the slit 18 so as to form a water impervious peripheral seal between the first busbar 11 and the plastic laminating interlayer 17 after bonding has taken place and to improve location control of the busbar 11.

The first electrically conductive ribbon 20a is connected at one end to a free end of the third limb 11c by, in this case, a soldered joint. The first electrically conductive ribbon 20a extends away from the position where it is connected to the third limb 11c and has a free end that projects outwardly from a lower edge 10e of the heated laminated window 10. In the example shown, the first electrically conductive ribbon 20a is arranged at approximately 90 degrees to the lower edge 10e of the heated laminated window 10.

The second electrically conductive ribbon 20b is L-shaped having a first portion 21 extending outwardly from the lower edge 10e of the heated window 10 adjacent to the first electrically conductive ribbon 20a and a second portion 22 arranged at right angles to the first portion 21 so as to lie parallel to and upon the second busbar 12.

The second electrically conductive ribbon 20b is connected to the second busbar 12 by, in this case, a soldered joint between the second portion 22 and the second busbar 12.

The plastic laminating interlayer 17 has a slit 30 formed therein arranged in this case at a slit angle α1 to the first portion 21 of the second electrically conductive ribbon 20b.

During assembly, the second electrically conductive ribbon 20b is inserted through the slit 30 and then folded over at the same angle as the angle α1 of the slit 30 in the plastic laminating interlayer 17 so that the first and second portion 21 and 22 lie on opposite sides of the plastic laminating interlayer 17.

Although for aid of understanding the slit 30 is shown to be much longer than the width of the second electrically conductive ribbon 20b as it passes through the slit 30, preferably the length of the slit 30 is such that the second electrically conductive ribbon 20b is close fit in the slit 30 prior to bonding. This helps to ensure that the second electrically conductive ribbon 20b is bonded on all sides to the plastic laminating interlayer 17 where it passes through the slit 18 so as to form a water impervious peripheral seal between the second electrically conductive ribbon 20b and the plastic laminating interlayer 17 after bonding has taken place.

The first portion 21 of the second electrically conductive ribbon 20b lies between the inner face 16i of the second pane of glass 16 and plastic laminating interlayer 17 and the second portion 22 of the second electrically conductive ribbon 20b lies between the inner face 15i of the first pane of glass 15 and plastic laminating interlayer 17.

The slit 30 is provided to locate the second busbar 12 during assembly of the heated laminated window 10 and also prevents the ingress of water from the second electrically conductive ribbon 20b past the position where the second electrically conductive ribbon 20b traverses and is sealed to the plastic laminating interlayer 17.

A turn angle θ1 through which the second electrically conductive ribbon 20b turns through depends upon the angle Φ1 of the slit 30. In the example shown the slit angle Φ1 is substantially equal to 135 degrees and a supplementary angle α1 is equal to 45 degrees because 180 - 135 is equal to 45 and the slit angle and supplementary angle always add up to 180 degrees.

The turn angle θ1 in this case is equal to 90 degrees and is equal to slit angle Φ1 minus the supplementary angle α1. The use of a ninety degree turn angle θ1 is beneficial because it allows the second portion 22 of the second electrically conductive ribbon 20b to be positioned parallel to and overlying the second busbar 12 so as to facilitate convenient connection of the second portion 22 to the second bus bar 12.

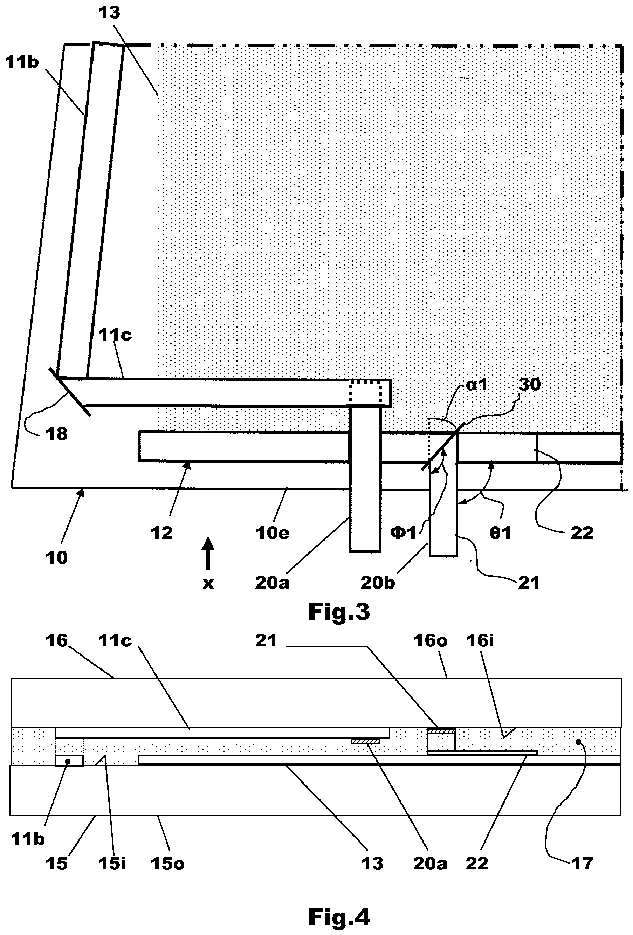

It will be appreciated that the angle of the slit could be measured such that it is the angle α1 shown on Fig.3 in which case the supplementary angle would be Φ1 and the turn angle θ1 would be equal to Φ1 minus α1.

It will be appreciated that the second electrically conductive ribbon 20b could be connected to the second busbar 12 to the other side of the first electrically conductive ribbon 20a and that the second electrically conductive ribbon 20b could, if required in such a case, be arranged as a mirror image of the second electrically conductive ribbon 20b shown in Fig.3.

During assembly of the heated laminated window 10 the two panes of glass 15, 16, the busbars 11, 12 along with their attached electrically conductive ribbons 20a, 20b and the plastic laminating interlayer 17 are placed in an assembly tool in their respective positions. A combination of pressure and heat is then applied to the two panes of glass 11, 16 which acts to bond the two panes of glass together. The bonding process also bonds the plastic laminating interlayer 17 to the two busbars 11, 12 and to the electrically conductive ribbons 20a, 20b on the faces of these components where they interface with the plastic laminating interlayer 17.

Although the two electrically conductive ribbons 20a, 20b are shown exiting from a lower edge 10e of the heated laminated windshield 10 it will be appreciated that they could alternatively be located on a side edge or the top edge of the heated laminated windshield 10.

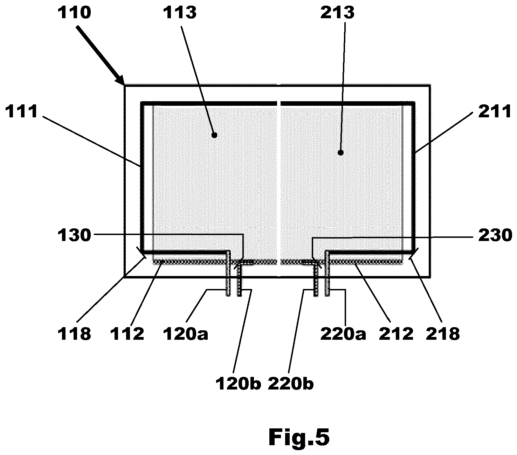

With particular reference to Fig.5 there is shown a heated laminated window 110 that is constructed in an identical manner to that previously described and for which like parts have the same reference with the addition of 100 or 200.

The only difference between the embodiment shown in Fig.5 and that shown in Figs.1 to 4 is that in the case of the embodiment shown in Fig.5 two window heaters 113, 213 are provide rather than one along with the required thin, flat electrical conductors 111, 112, 120a, 120b; 211, 212, 220a, 220b.

As before angled slits or cuts 118, 130; 218, 230 are provided to assist with the location of the electrical conductors 111, 112, 120a, 120b; 211, 212, 220a, 220b during assembly of the heated laminated window 110. The slits 118, 130; 218, 230 as before allow the respective electrical conductors 111, 112, 120a, 120b; 211, 212, 220a, 220b to pass through the PVB so as to produce a water seal and allow improved location/ positioning of the electrical conductors 111, 112, 120a, 120b; 211, 212, 220a, 220b during manufacture.

As before the electrical conductors 111, 112, 120a, 120b; 211, 212, 220a, 220b are folded over as they pass through one of the slits 118, 130; 218, 230 to produce a corner or turn where required. This provides a very compact turn to be achieved in a cost effective manner while providing the required spacing from the corner of the windshield.

The use of two window heaters 113, 213 has the advantage that the current required for each heater to produce a similar heating effect is half that required for a single window heater of the type shown in Fig.1.

Although the electrically conductive ribbons 120a, 120b; 220a, 220b are shown exiting from a lower edge of the heated laminated windshield 110 it will be appreciated that they could alternatively be located on a side edge or the top edge of the heated laminated windshield 110.

It will be appreciated that instead of separate second busbars 112, 212 there may be a common second busbar for both of the window heaters 113, 213 in which case only one ribbon connector would be required for the second busbar.

Therefore, in summary, by using an angled slit in the laminating interlayer and folding a flat electrical conductor over as it passes through the laminating interlayer a compact turn of the flat electrical conductor can be produced that enables a water impermeable seal to be produced when bonding takes place.

The invention has several advantages, firstly, by locating the positive and earth polarity busbars on opposite sides of the PVB in regions where they are in close proximity is the best method to avoid short circuits between the busbars.

By routing one of the busbars through an angled slit cut in near a corner of the PVB, allows the location of the respective busbar to traverse from one side of the PVB to the other side in a compact and simple manner.

The use of a folded corner for a busbar where it traverses the PVB efficiently changes the direction of the busbar, provides a good water ingress seal, helps to locate the busbar on the PVB during manufacture and keeps the busbar as far as possible from the corner of the windshield so as to maintain any minimum distance requirements from the glass edge.

By using a 135/45 degree cut/slit in the PVB for a ribbon connector allows the ribbon connector to be passed thorough the cut/ slit and folded over so as to produce a right angle turn. This seals the ribbon from water ingress and changes the ribbon direction to be parallel with the bus where it can be conveniently soldered to the busbar.

The use of a folded busbar and a folded ribbon connector allows two opposite polarity connectors to be located side-by-side where they can conveniently be connected to a power supply of the motor vehicle.

By positioning the opposite polarity buses on either side of a PVB film in a staggered manner reduces glass stress caused by localised glass bending without reducing the area of the window heater.

It will be appreciated that alternative methods of producing a heated laminated windshield could be used and that the invention is not limited to the exact process described herein.

Similarly, the location, size and shape of the busbars need not be as shown and/or the shape and location of the electrical ribbons need not be as shown and the embodiments provided are only examples provided for improving understanding of the invention.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A heated laminated window (10) comprising first and second panes of glass(15 and 16), a laminating interlayer (17) interposed between the two panes of glass (15 and 16) and bonded thereto to form a laminated window, an electrical window heater (13, 113, 213) interposed between the first pane of glass (15) and the laminating interlayer (17) and a thin, flat electrical conductor (11, 20b, 111, 120b, 211, 220b) for connecting the electrical window heater (13, 113, 213) to a source of electrical power **characterised in that** the thin, flat electrical conductor (11, 20b; 111, 120b; 211, 220b) extends through an angled slit (18, 30, 118, 130, 218, 230) in the laminating interlayer (17) and is folded over at an angle corresponding to the angular relationship of the slit (18, 30, 118, 130, 218, 230) to the thin, flat electrical conductor (11, 20b, 111, 120b, 211, 220b) as it passes through the slit (18, 30, 118, 130, 218, 230) so as to have first and second portions (11a, 11b and 11c; 21 and 22) lying on opposite sides of the laminating interlayer (17) arranged at a turn angle (θ, θ1) with respect to one another.

2. A heated laminated window as claimed in claim 1 wherein the thin, flat electrical conductor (11, 20b; 111, 120b; 211, 220b) is bonded on all sides to the laminating interlayer (17) where it passes through the slit (18, 30, 118, 130, 218, 230) to form a water impervious seal between laminating interlayer (17) and the thin, flat electrical conductor (11, 20b; 111, 120b; 211, 220b).

3. A heated laminated window as claimed in claim 1 or in claim 2 wherein the first portion (11a, 11b) of the thin, flat electrical conductor (11) is interposed between the first pane of glass (15) and the laminating interlayer (17) and extends from a position where the thin, flat electrical conductor (11) passes through the slit (18) to an end where it is connected to a first end of the window heater (13) and the second portion (11c) extends away from the position where the first thin, flat electrical conductor (11) passes through the slit (18) and is interposed between the laminating layer (17) and the second pane of glass (16).

4. A heated laminated window as claimed in claim 3 wherein a conductive ribbon (20a) is connected to the second portion (11c) of the first thin, flat electrical conductor (11) for connecting the first thin, flat electrical conductor (11) to a source of electrical power.

5. A heated laminated window as claimed in claim 4 wherein the first thin, flat electrical conductor is a first busbar (11) connected to the first end of the window heater (13) and the heated laminated window (10) further comprises a second busbar (12) connected to a second end of the window heater (13).

6. A heated window as claimed in claim 5 wherein the conductive ribbon (20a) extends away from the second portion (11c) of the thin, flat electrical conductor (11) and has a free end extending outwardly from an outer peripheral edge of the laminated window.

7. A heated laminated window as claimed in claim 1 wherein the heated laminated window (10) has a first busbar (11) connected to a first end of the window heater (13) and a second busbar (12) connected to a second end of the window heater (13) and the thin, flat electrical conductor is an electrically conductive ribbon (20b) having first and second portions (21 and 22) for connecting the second busbar (12) to a source of electrical power.

8. A heated laminated window as claimed in claim 7 in which the first portion (21) is interposed between the second pane of glass (16) and the laminating interlayer (17) and the second portion (22) is interposed between the first pane of glass (15) and the laminating interlayer (17) wherein the first portion (21) extends away from the position where the electrically conductive ribbon (20b) passes through the slit (30) in the laminating interlayer (17) to a free end extending outwardly from an outer peripheral edge of the laminated window and the second portion (22) extends away from the position where the electrically conductive ribbon (20b) passes through the slit (18) and is connected to the second busbar (12).

9. A heated laminated window as claimed in claim 1 in which the heated laminated window has first and second busbars (11 and 12)connected to respective first and second ends of the window heater (13), two slits (18, 30) in the laminating interlayer (17) and two thin, flat electrical conductors (11, 20b) each of which extends through a respective one of the two slits (18, 30) in the laminating interlayer wherein a first one of the two thin flat electrical conductors (11, 20b) forms the first busbar (11) and a second one of the two thin, flat electrical conductors (11, 20b) forms an electrically conductive ribbon (20b) used to connect the second busbar (12) to a source of electrical power.

10. A heated laminated window as claimed in claim 1 in which the heated laminated window comprises four angled slits (118, 130; 218, 230) in the laminating interlayer, four thin, flat electrical conductors (111, 120b; 211, 220b) each of which extends through a respective one of the slits (118, 130; 218, 230) and first and second window heaters (113, 213) each of which has respective first and second busbars (111, 112; 211, 212) connected to respective first and second ends of the respective window heater (113, 213), wherein the first window heater (113) has a first one of the four thin flat electrical conductors (111, 120b; 211, 220b) connected to it in the form of the respective first busbar (111) and a second one of the four thin, flat electrical conductors in the form of an electrically conductive ribbon (120b) connecting the respective second busbar (112) to a source of electrical power and the second window heater (213) has a third one of the four thin flat electrical conductors (111, 120b; 211, 220b) connected to it in the form of the respective first busbar (211) and a fourth one of the four thin, flat electrical conductors (111, 120b; 211, 220b) in the form of an electrically conductive ribbon (220b) connecting the respective second busbar (212) to the source of electrical power.

11. A motor vehicle having a heated laminated window as claimed in any of claims 1 to 10.

## Patentansprüche

1. Beheizbares Verbundfenster (10), umfassend eine erste und eine zweite Glasscheibe (15 und 16), eine zur Bildung eines Verbundfensters zwischen den beiden Glasscheiben (15 und 16) angeordnete und mit diesen verbundene Laminat-Zwischenschicht (17), eine zwischen der ersten Glasscheibe (15) und der Laminat-Zwischenschicht (17) angeordnete elektrische Fensterheizung (13, 113, 213) und einen dünnen, flachen elektrischen Leiter (11, 20b, 111, 120b, 211, 220b), um die elektrische Fensterheizung (13, 113, 213) mit einer Stromquelle zu verbinden, **dadurch gekennzeichnet, dass** sich der dünne, flache elektrische Leiter (11, 20b; 111, 120b; 211, 220b) durch einen in der Laminat-Zwischenschicht (17) ausgebildeten abgewinkelten Schlitz (18, 30, 118, 130, 218, 230) erstreckt und in einem Winkel umgelegt ist, welcher der Winkelbeziehung des Schlitzes (18, 30, 118, 130, 218, 230) zum dünnen, flachen elektrischen Leiter (11, 20b, 111, 120b, 211, 220b) entspricht, wenn er durch den Schlitz (18, 30, 118, 130, 218, 230) geht und somit auf den gegenüberliegenden in einem Drehwinkel (0, 01) zueinander angeordneten Seiten der Laminat-Zwischenschicht (17) einen ersten und zweiten Abschnitte (11a, 11b und 11c; 21 und 22) aufweist.

2. Beheizbares Verbundfenster gemäß Anspruch 1, wobei der dünne, flache elektrische Leiter (11, 20b; 111, 120b; 211, 220b) dort, wo er durch den Schlitz (18, 30, 118, 130, 218, 230) verläuft zur Bildung einer wasserundurchlässigen Dichtung zwischen der Laminat-Zwischenschicht (17) und dem dünnen, flachen elektrischen Leiter (11, 20b; 111, 120b; 211, 220b) allseitig mit der Laminat-Zwischenschicht (17) verbunden ist.

3. Beheizbares Verbundfenster gemäß Anspruch 1 oder Anspruch 2, wobei der erste Abschnitt (11a, 11b) des dünnen, flachen elektrischen Leiters (11) zwischen der ersten Glasscheibe (15) und der Laminat-Zwischenschicht (17) angeordnet ist und sich von der Stelle, an der der dünne, flache elektrische Leiter (11) durch den Schlitz (18) verläuft bis zu dem Ende erstreckt, wo er mit einem ersten Ende der Fensterheizung (13) verbunden ist, wobei sich der zweite Abschnitt (11c) von der Stelle weg erstreckt, an der der erste dünne, flache elektrische Leiter (11) durch den Schlitz (18) verläuft, und zwischen der Laminat-Zwischenschicht (17) und der zweiten Glasscheibe (16) angeordnet ist.

4. Beheizbares Verbundfenster gemäß Anspruch 3, wobei ein leitendes Band (20a) mit dem zweiten Abschnitt (11c) des ersten dünnen, flachen elektrischen Leiters (11) verbunden ist, um den ersten dünnen, flachen elektrischen Leiter (11) mit einer Stromquelle zu verbinden.

5. Beheizbares Verbundfenster gemäß Anspruch 4, wobei der erste dünne, flache elektrische Leiter eine mit dem ersten Ende der Fensterheizung (13) verbundene erste Sammelschiene (11) ist und das beheizbare Verbundfenster (10) ferner eine zweite Sammelschiene (12) umfasst, die mit einem zweiten Ende der Fensterheizung (13) verbunden ist.

6. Beheizbares Fenster gemäß Anspruch 5, wobei sich das leitende Band (20a) vom zweiten Abschnitt (11c) des dünnen, flachen elektrischen Leiters (11) weg erstreckt und ein freies Ende aufweist, das sich von einer äußeren Laufkante des Verbundfensters nach außen erstreckt.

7. Beheizbares Verbundfenster gemäß Anspruch 1, wobei das beheizbare Verbundfenster (10) eine mit einem ersten Ende der Fensterheizung (13) verbundene erste Sammelschiene (11) und eine mit einem zweiten Ende der Fensterheizung (13) verbundene zweite Sammelschiene (12) aufweist und der dünne, flache elektrische Leiter ein elektrisch leitendes Band (20b) mit einem ersten und einem zweiten Abschnitt (21 und 22) ist, um die zweite Sammelschiene (12) mit einer Stromquelle zu verbinden.

8. Beheizbares Verbundfenster gemäß Anspruch 7, wobei der erste Abschnitt (21) zwischen der zweiten Glasscheibe (16) und der Laminat-Zwischenschicht (17) angeordnet ist und der zweite Abschnitt (22) zwischen der ersten Glasscheibe (15) und der Laminat-Zwischenschicht (17) angeordnet ist, wobei sich der erste Abschnitt (21) von der Stelle weg erstreckt, an der das elektrisch leitende Band (20b) durch den Schlitz (30) in der Laminat-Zwischenschicht (17) zu einem freien Ende verläuft, das sich von einer Laufkante des Verbundfensters nach außen erstreckt und wobei sich der zweite Abschnitt (22) von der Stelle weg erstreckt, an der das elektrisch leitende Band (20b) durch den Schlitz (18) verläuft und mit der zweiten Sammelschiene (12) verbunden ist.

9. Beheizbares Verbundfenster gemäß Anspruch 1, bei dem das beheizbare Verbundfenster aufweist: mit den jeweiligen ersten und zweiten Enden der Fensterheizung (13) verbundene erste und zweite Sammelschienen (11 und 12), zwei Schlitze (18, 30) in der Laminat-Zwischenschicht (17) und zwei dünne, flache elektrische Leiter (11, 20b), von denen sich jeder durch einen der beiden Schlitze (18, 30) in der Laminat-Zwischenschicht erstreckt, wobei der erste der beiden dünnen flachen elektrischen Leiter (11, 20b) die erste Sammelschiene (11) bildet und der zweite der beiden dünnen, flachen elektrischen Leiter (11, 20b) ein elektrisch leitendes Band (20b) bildet, um die zweite Sammelschiene (12) mit einer Stromquelle zu verbinden.

10. Beheizbares Verbundfenster gemäß Anspruch 1, bei dem das beheizte Verbundfenster in der Laminat-Zwischenschicht vier abgewinkelte Schlitze (118, 130; 218, 230) aufweist, vier dünne, flache elektrische Leiter (111, 120b; 211, 220b) umfasst, von denen sich jeder durch einen der Schlitze (118, 130; 218, 230) und die ersten und zweiten Fensterheizungen (113, 213) erstreckt, von denen jeder jeweils eine erste und eine zweite Sammelschiene (111, 112; 211, 212) aufweist, die mit den jeweiligen ersten und zweiten Enden der jeweiligen Fensterheizung (113, 213) verbunden sind, wobei an die erste Fensterheizung (113) ein erster der vier dünnen, flachen elektrischen Leiter (111, 120b; 211, 220b) in Form der jeweiligen ersten Sammelschiene (111) angeschlossen ist und einen zweiten der vier dünnen, flachen elektrischen Leiter in Form eines elektrisch leitenden Bandes (120b) aufweist, das die jeweilige zweite Sammelschiene (112) mit einer Stromquelle verbindet und wobei die zweite Fensterheizung (213) einen dritten der vier dünnen, flachen elektrischen Leiter (111, 120b; 211, 220b) aufweist, der an die jeweilige erste Sammelschiene (211) angeschlossen ist und einen vierten der vier dünnen, flachen elektrischen Leiter (111, 120b; 211, 220b) in Form eines elektrisch leitenden Bandes (220b) aufweist, um die jeweilige zweite Sammelschiene (212) mit der Stromquelle zu verbinden.

11. Kraftfahrzeug mit einem beheizbaren Verbundfenster gemäß einem der Ansprüche 1 bis 10.

## Revendications

1. Une vitre laminée chauffée (10) comprenant un premier et un deuxième carreaux de verre (15 et 16), une couche intercalaire de laminage (17) interposée entre les deux carreaux de verre (15 et 16) et collée à ceux-ci pour former une vitre laminée, un dispositif de chauffage électrique de vitre (13, 113, 213) interposé entre le premier carreau de verre (15) et la couche intercalaire de laminage (17) et un conducteur électrique plat et mince (11, 20b, 111, 120b, 211, 220b) pour connecter le dispositif de chauffage électrique de vitre (13, 113, 213) à une source d'énergie électrique, **caractérisé en ce que** le conducteur électrique plat et mince (11, 20b ; 111, 120b ; 211, 220b) s'étend à travers une fente angulaire (18, 30, 118, 130, 218, 230) dans la couche intercalaire de laminage (17) et est replié sur un angle correspondant à la relation angulaire de la fente (18, 30, 118, 130, 218, 230) au conducteur électrique plat et mince (11, 20b, 111, 120b, 211, 220b) lorsqu'il passe à travers la fente (18, 30, 118, 130, 218, 230) de manière à avoir les première et deuxième parties (11a, 11b et 11c; 21 et 22) se trouvant sur les côtés opposés de la couche intercalaire de laminage (17) disposées à un angle de rotation (θ, θ1) l'une par rapport à l'autre.

2. Une vitre laminée chauffée selon la revendication 1 dans laquelle le conducteur électrique plat et mince (11, 20b ; 111, 120b ; 211, 220b) est collé sur tous les côtés à la couche intercalaire de laminage (17) où il passe à travers la fente (18, 30, 118, 130, 218, 230) pour former un joint imperméable à l'eau entre la couche intercalaire de laminage (17) et le conducteur électrique plat et mince (11, 20b ; 111, 120b ; 211, 220b).

3. Une vitre laminée chauffée selon la revendication 1 ou la revendication 2 dans laquelle la première partie (11a, 11b) du conducteur électrique plat et mince (11) est interposée entre le premier carreau de verre (15) et la couche intercalaire de laminage (17) et s'étend depuis une position où le conducteur électrique plat et mince (11) passe à travers la fente (18) jusqu'à une extrémité où il est connecté à une première extrémité du dispositif de chauffage de vitre (13) et la deuxième partie (11c) s'étend à l'écart de la position où le premier conducteur électrique plat et mince (11) passe à travers la fente (18) et est interposé entre la couche de laminage (17) et le deuxième carreau de verre (16).

4. Une vitre laminée chauffée selon la revendication 3 dans laquelle un ruban conducteur (20a) est connecté à la deuxième partie (11c) du premier conducteur électrique plat et mince (11) pour connecter le premier conducteur électrique plat et mince (11) à une source d'énergie électrique.

5. Une vitre laminée chauffée selon la revendication 4 dans laquelle le premier conducteur électrique plat et mince est une première barre omnibus (11) connectée à la première extrémité du dispositif de chauffage de vitre (13) et la vitre laminée chauffée (10) comprend en outre une deuxième barre omnibus (12) connectée à une deuxième extrémité du dispositif de chauffage de vitre (13).

6. Une vitre chauffée selon la revendication 5 dans laquelle le ruban conducteur (20a) s'étend à l'écart de la deuxième partie (11c) du conducteur électrique plat et mince (11) et a une extrémité libre s'étendant vers l'extérieur à partir d'un bord périphérique extérieur de la vitre laminée.

7. Une vitre laminée chauffée selon la revendication 1 dans laquelle la vitre laminée chauffée (10) a une première barre omnibus (11) connectée à une première extrémité du dispositif de chauffage de vitre (13) et une deuxième barre omnibus (12) connectée à une deuxième extrémité du dispositif de chauffage de vitre (13) et le conducteur électrique plat et mince est un ruban électroconducteur (20b) ayant les première et deuxième parties (21 et 22) pour connecter la deuxième barre omnibus (12) à une source d'énergie électrique.

8. Une vitre laminée chauffée selon la revendication 7 dans laquelle la première partie (21) est interposée entre le deuxième carreau de verre (16) et la couche intercalaire de laminage (17) et la deuxième partie (22) est interposée entre le premier carreau de verre (15) et la couche intercalaire de laminage (17) dans laquelle la première partie (21) s'étend à l'écart de la position où le ruban électroconducteur (20b) passe à travers la fente (30) dans la couche intercalaire de laminage (17) vers une extrémité libre s'étendant vers l'extérieur à partir d'un bord périphérique extérieur de la vitre laminée et la deuxième partie (22) s'étend à l'écart de la position où le ruban électroconducteur (20b) passe à travers la fente (18) et est connecté à la deuxième barre omnibus (12).

9. Une vitre laminée chauffée selon la revendication 1 dans laquelle la vitre laminée chauffée a une première et une deuxième barre omnibus (11 et 12) connectées aux première et deuxième extrémités respectives du dispositif de chauffage de vitre (13), deux fentes (18, 30) dans la couche intercalaire de laminage (17) et deux conducteurs électriques plats et minces (11, 20b) dont chacun s'étend à travers une des deux fentes respectives (18, 30) dans la couche intercalaire de laminage dans laquelle un premier des deux conducteurs électriques plats et minces (11, 20b) forme la première barre omnibus (11) et un deuxième des deux conducteurs électriques plats et minces (11, 20b) forme un ruban électroconducteur (20b) utilisé pour connecter la deuxième barre omnibus (12) à une source d'énergie électrique.

10. Une vitre laminée chauffée selon la revendication 1 dans laquelle la vitre laminée chauffée comprend quatre fentes angulaires (118, 130 ; 218, 230) dans la couche intercalaire de laminage, quatre conducteurs électriques plats et fins (111, 120b ; 211, 220b) dont chacun s'étend à travers une des fentes respectives (118, 130 ; 218, 230) et des premier et deuxième dispositifs de chauffage de vitre (113, 213) dont chacun a les première et deuxième barres omnibus respectives (111, 112 ; 211, 212) connectées aux première et deuxième extrémités respectives du dispositif de chauffage de vitre respectif (113, 213), dans laquelle le premier dispositif de chauffage de vitre (113) a un premier des quatre conducteurs électriques plats et minces (111, 120b ; 211, 220b) connecté à celui-ci sous la forme de la première barre omnibus respective (111) et un deuxième des quatre conducteurs électriques plats et minces sous la forme d'un ruban électroconducteur (120b) connectant la deuxième barre omnibus respective (112) à une source d'énergie électrique et le deuxième dispositif de chauffage de vitre (213) a un troisième des quatre conducteurs électriques plats et minces (111, 120b ; 211, 220b) connecté à celui-ci sous la forme de la première barre omnibus respective (211) et un quatrième des quatre conducteurs électriques plats et minces (111, 120b ; 211, 220b) sous la forme d'un ruban électroconducteur (220b) connectant la deuxième barre omnibus respective (212) à la source d'énergie électrique.

11. Un véhicule à moteur ayant une vitre laminée chauffée selon l'une quelconque des revendications 1 à 10.
